# EUROPEAN PATENT APPLICATION

(11) **EP 4 668 187 A1**
(43) Date of publication of application: **24.12.2025**
(21) Application number: 23922909.9
(22) Date of filing: 08.12.2023
(51) Int. Cl.: G06Q 20/20

(54) **INFORMATION PROCESSING DEVICE**

(30) Priority: 14.02.2023 JP 2023021058
(71) Applicant: Toshiba TEC Kabushiki Kaisha, Tokyo 141-8562 (JP)
(72) Inventor: SAKAGUCHI, Takuji, Tokyo 141-8562 (JP); ISHIDA, Erina, Izunokuni-shi, Shizuoka 410-2392 (JP); KONDO, Kae, Izunokuni-shi, Shizuoka 410-2392 (JP)
(74) Representative: Bandpay & Greuter
(86) International application number: PCT/JP2023/043979
(87) International publication number: WO 2024/171576

(57) **Abstract**

An information processing device (50) according to an embodiment includes a display unit (53) that displaying electronic receipt information, characterized in that the information processing device (50) further comprises: reception means (514) that receives an input of an identifier capable of identifying a user, and a display control means (514) that displays a list of pieces of the electronic receipt information associated with the identifier, in which the display control means (514) displays, when additional information on benefit granting is added to the electronic receipt information, first display information according to a type of the additional information in association with the electronic receipt information displayed in the list.

## Description

### FIELD

An embodiment of the present invention relates to an information processing device.

### BACKGROUND

In recent years, there has been provided an electronic receipt system that converts a receipt or an invoice delivered from a store to a shopper at the time of settlement into electronic data, transmits the electronic data to a portable terminal or the like of the shopper, and displays the electronic data. By converting a receipt into electronic data, there is an advantage in that a user can use receipt data for housekeeping account-book software or the like. In addition, there is an advantage in that consumption of a receipt sheet can be reduced by using the electronic receipt for an introduction store.

Furthermore, there is also an attempt to add a right to grant a point capable of being used in a store or an electronic receipt system to an electronic receipt as a benefit of product purchase, thereby leading to promotion of sales of a store or a product and promotion of use of the electronic receipt.

However, there is a problem in that such a benefit content is less likely to be recognized by persons other than customers who actively use the electronic receipt. In addition, there is a problem in that it is necessary to perform a transition to a screen on which details of the benefit content are displayed in order for a customer to know the details.

### SUMMARY OF THE INVENTION

### Problem to be Solved by the Invention

An object of the present invention is to provide an information processing device capable of easily confirming an electronic receipt with a benefit.

### Means for Solving Problem

According to one embodiment, an information processing device includes, a reception means that receives an input of an identifier capable of identifying a user; and a display control means that displays a list of pieces of electronic receipt information associated with the identifier, wherein the display control means displays, when additional information on benefit granting is added to the electronic receipt information, first display information according to a type of the additional information in association with the electronic receipt information displayed in the list.

### BRIEF DESCRIPTION OF DRAWINGS

FIG. 1 is a diagram illustrating an example of a configuration of an electronic receipt system according to an embodiment.
FIG. 2 is a diagram illustrating an example of a hardware configuration of a POS terminal according to the embodiment.
FIG. 3 is a diagram illustrating an example of a hardware configuration of an electronic receipt server according to the embodiment.
FIG. 4 is a diagram illustrating an example of a hardware configuration of an electronic receipt management server according to the embodiment.
FIG. 5 is a diagram schematically illustrating an example of a data configuration of an electronic receipt management unit according to the embodiment.
FIG. 6 is a diagram illustrating an example of a hardware configuration of a customer terminal according to the embodiment.
FIG. 7 is a diagram illustrating an example of a hardware configuration of a point server according to the embodiment.
FIG. 8 is a diagram schematically illustrating an example of a data configuration of a point management unit according to the embodiment.
FIG. 9 is a diagram illustrating an example of a functional configuration provided in the POS terminal according to the embodiment.
FIG. 10 is a flowchart illustrating an example of processing performed by the POS terminal according to the embodiment.
FIG. 11 is a flowchart illustrating an example of closing processing performed by the POS terminal according to the embodiment.
FIG. 12 is a flowchart illustrating an example of electronic receipt management processing performed by the electronic receipt server according to the embodiment.
FIG. 13 is a diagram illustrating an example of a functional configuration provided in the electronic receipt management server according to the embodiment.
FIG. 14 is a flowchart illustrating an example of processing performed by the electronic receipt management server according to the embodiment.
FIG. 15 is a diagram illustrating an example of a functional configuration provided in the customer terminal according to the embodiment.
FIG. 16 is a flowchart illustrating an example of processing performed by the customer terminal according to the embodiment.
FIG. 17 is a diagram illustrating an example of a screen displayed on a display unit of the customer terminal according to the embodiment.
FIG. 18 is a diagram illustrating an example of the screen displayed on the display unit of the customer terminal according to the embodiment.
FIG. 19 is a diagram illustrating an example of the screen displayed on the display unit of the customer terminal according to the embodiment.
FIG. 20 is a diagram illustrating an example of the screen displayed on the display unit of the customer terminal according to the embodiment.

### DETAILED DESCRIPTION

Hereinafter, embodiments of an information processing device and a program will be described with reference to the drawings. It is noted that the present invention is not limited by the embodiments described below.

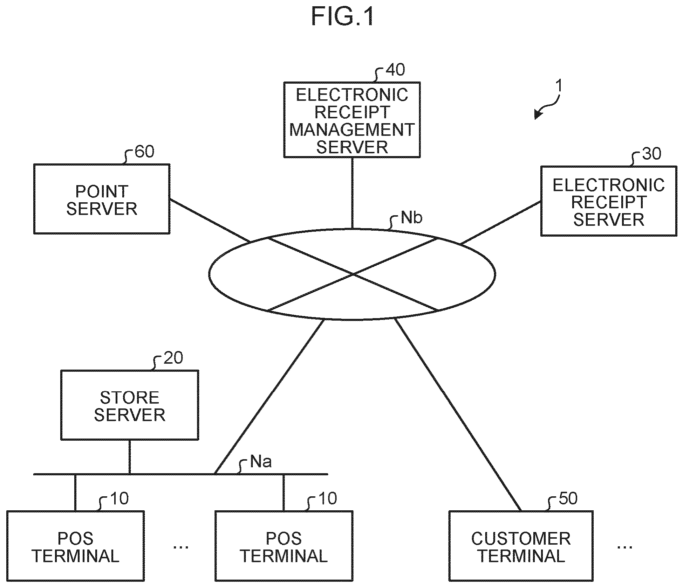

FIG. 1 is a diagram illustrating an example of a configuration of an electronic receipt system. As illustrated in FIG. 1, an electronic receipt system 1 includes a point of sales (POS) terminal 10, a store server 20, an electronic receipt server 30, an electronic receipt management server 40, a customer terminal 50, and a point server 60.

The POS terminal 10 and the store server 20 are provided in, for example, each store. The POS terminal 10 and the store server 20 are connected to a network Na such as a local area network (LAN) provided in the store. The network Na is connected to a network Nb of the Internet or various public networks via various network devices. It is noted that the number of POS terminals 10 provided in the same store is not particularly limited, and may be provided in plural numbers.

The POS terminal 10 is a product sales data processing device that executes product sales data processing and settlement processing of a product sold in a store. The POS terminal 10 generates receipt information including a transaction content of the product, the settlement of which has been completed, and dispenses a paper receipt showing the receipt information printed by a printing unit 13 to be described later. Furthermore, the POS terminal 10 generates electronic receipt information obtained by converting the data format of the receipt information.

The electronic receipt information is receipt information obtained by converting receipt information (that is, receipt information in an unstructured format) printed on a receipt sheet into a structured format such as a comma-separated values (CSV) method or a J-son method. The electronic receipt information includes an identifier for identifying electronic receipt information, in addition to transaction information of a product (product sales data and settlement information), a store name of a store that has generated the electronic receipt information, a member ID, a transaction date and time, and the like. Here, the member ID is identification information for identifying a member. In the present embodiment, an example in which the address of a recipient device (a customer terminal 50) serving as an output destination of the electronic receipt information is used as the member ID will be described, but the present invention is not limited thereto.

When generating the electronic receipt information, the POS terminal 10 outputs (transmits) the generated electronic receipt information to the electronic receipt server 30 via the network Na. The transmission method of the electronic receipt information is not particularly limited, and a general-purpose protocol such as HTTP or HTTPS may be used.

It is noted that the electronic receipt information generated by the POS terminal 10 is not limited to information related to a product transaction. For example, in a case where a certificate such as a certificate is prepared in the purchased product, the POS terminal 10 may transmit the certificate to the electronic receipt server 30 as the electronic receipt information. Furthermore, in a case where predetermined processing such as recharging of electronic money is performed at the time of transaction, the POS terminal 10 may transmit duplicate document information indicating the processing content to the electronic receipt server 30 as the electronic receipt information.

The store server 20 comprehensively manages product sales data processing and the like performed by the POS terminal 10. For example, the store server 20 stores and manages the product sales data generated by the product sales data processing of the POS terminal 10, and stores and manages a product data file or the like used for product sales data processing.

It is noted that, although the configuration in which the POS terminal 10 outputs the electronic receipt information will be described in the present embodiment, the present invention is not limited thereto, and the receipt information generated by the POS terminal 10 may be output to the electronic receipt server 30 as the electronic receipt information by allowing the store server 20 or a conversion device (not illustrated) to convert the data format.

The electronic receipt server 30 is provided, for example, in the head office of a company that operates a store or a chain store (hereinafter, referred to as a store). Furthermore, the electronic receipt server 30 functions as, for example, a receipt management server for a company that manages electronic receipt information for each company that operates a store.

The electronic receipt server 30 receives the electronic receipt information transmitted from the POS terminal 10 via the network Nb. Furthermore, the electronic receipt server 30 transmits the received electronic receipt information to the electronic receipt management server 40 via the network Nb.

The electronic receipt management server 40 is a server device that stores and manages the electronic receipt information transmitted from each of the electronic receipt servers 30. The electronic receipt management server 40 functions as, for example, a receipt management server for a member that collectively manages electronic receipt information of various companies each operating a store.

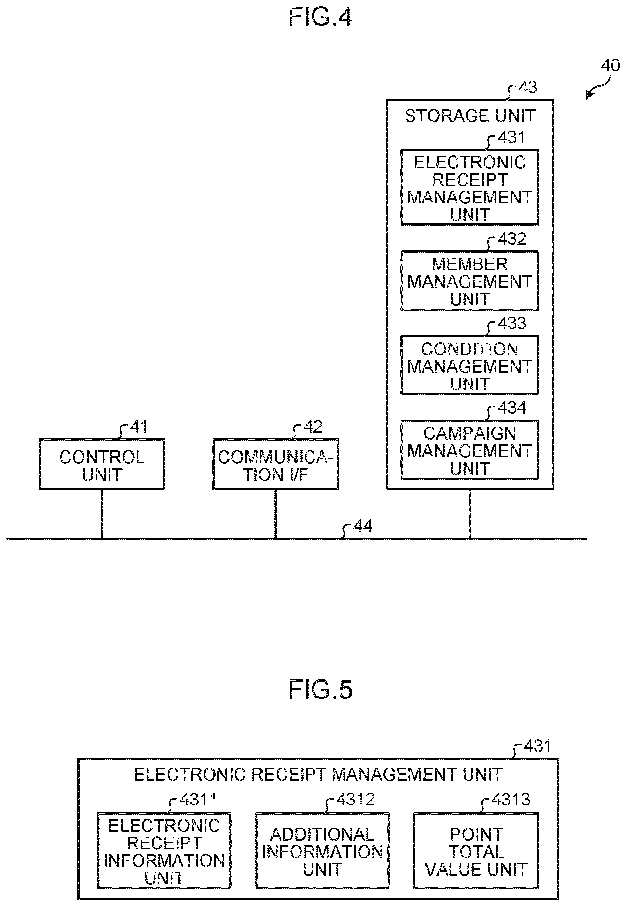

The electronic receipt management server 40 stores and manages member data such as a name and a member ID of a member who has performed member registration. Specifically, the electronic receipt management server 40 stores and manages the member data in a member management unit 432 (refer to FIG. 4) stored in a database DB or the like. It is noted that a member management server or the like that stores and manages member data may be configured to be provided separately from the electronic receipt management server 40.

The electronic receipt management server 40 receives the electronic receipt information transmitted from the electronic receipt server 30 via the network Nb. The electronic receipt management server 40 stores the received electronic receipt information in an electronic receipt management unit 431 to be described later, which is stored in the database DB. Specifically, the electronic receipt management server 40 stores and manages the electronic receipt information for each member on the basis of the member ID included in the electronic receipt information.

Further, when the electronic receipt information is stored in the electronic receipt management unit 431, the electronic receipt management server 40 specifies the customer terminal 50 (a recipient device) on the basis of the member ID of the electronic receipt information. Then, the electronic receipt management server 40 notifies the customer terminal 50 that the new electronic receipt information has been stored via the network Nb.

Furthermore, when the electronic receipt management server 40 stores the electronic receipt information in the electronic receipt management unit 431, it is possible to add various types of additional information regarding benefit granting to the electronic receipt information.

It is noted that, in the present embodiment, adding is not limited to a form of being externally added to the electronic receipt information, and may be a form included in the electronic receipt information. Furthermore, adding is a concept including a state in which the electronic receipt information and the additional information are associated with each other by a link or the like.

For example, in a case where the electronic receipt information has a right to acquire points, the electronic receipt management server 40 adds benefit information regarding point granting to the electronic receipt information as additional information. The point is a monetary value granted according to the purchase amount of the product, and can be used as a value equivalent to cash for the product being sold in the store.

Here, the benefit information includes, for example, a condition ID for identifying a condition for granting a point and a state related to a right to acquire a point. The state related to the right to acquire a point indicates, for example, "valid" indicating an available state, "invalid" indicating a state invalidated due to expiration or the like, "used" indicating a state in which the right is exercised, or the like.

Furthermore, for example, in a case where the product included in the electronic receipt information is a target product of a campaign such as sales promotion, the electronic receipt management server 40 adds campaign information of the campaign to the electronic receipt as additional information. Here, the campaign information includes, for example, a campaign ID for identifying a campaign and a state related to an application of the campaign. The state related to the application of the campaign indicates, for example, the number of times of application in addition to whether the campaign has been applied. It is noted that, in the present embodiment, an example in which a reward obtained by applying for a campaign is used as a point will be described, but the present invention is not limited thereto.

Furthermore, in a case where a point is granted based on the benefit information added to the electronic receipt information or in a case where a point is granted based on an application for a campaign, the electronic receipt management server 40 stores a total value (hereinafter, also referred to as a point total value) of the points in association with the electronic receipt information.

Further, upon receiving a list request of electronic receipts designating a member ID from the customer terminal 50 connected via the network Nb, the electronic receipt management server 40 provides a list of electronic receipt information stored in the electronic receipt management unit 431 in association with the member ID to the customer terminal 50 serving as a request source. Furthermore, in a case where additional information is added to the electronic receipt information, the additional information is provided to the customer terminal 50 serving as a request source.

The customer terminal 50 is an example of an information processing device. The customer terminal 50 is a terminal device such as a smartphone, a mobile phone, a personal digital assistant (PDA), or a tablet computer which are carried and used by a member who is a user of the present system. Further, the customer terminal 50 may be a stationary terminal device such as a personal computer (PC). For example, the customer terminal 50 implements an application such as a web browser for browsing various types of information provided on the network Nb.

The customer terminal 50 is connected to the electronic receipt management server 40 via the network Nb. The customer terminal 50 receives a notification indicating that the electronic receipt is stored from the electronic receipt management server 4 via the network Nb. Further, the customer terminal 50 transmits, in response to the operation from the operator, browsing inquiry information of the electronic receipt to the electronic receipt management server 4 via the network Nb.

In addition, the customer terminal 50 displays various screens related to the display of the electronic receipt information on a display unit 53 to be described later in association with the electronic receipt management server 4. The operator of the customer terminal 50 can display a list of electronic receipt information associated with his/her member ID on the display unit 53 or can display specific electronic receipt information on the display unit 53 by operating the screen displayed on the display unit 53. Hereinafter, the electronic receipt information displayed on the display unit 53 is also referred to as an "electronic receipt".

The point server 60 is a server device that manages points attached to respective members. The point server 60 is communicably connected to various devices via the network Nb.

The point server 60 stores and manages a history of point granting and use for each member (member ID). In addition, the point server 60 stores and manages a total value of the points for each member as a cumulative point.

Specifically, when receiving the member ID and the point value of the point granted to the user of the member ID from the electronic receipt management server 40, the point server 60 associates the member ID with the issuance date and time of the point and stores the point as an issuance history for each member ID.

In addition, the point server 60 calculates a total value of the points and stores the total value for each member ID as a cumulative point. When the customer uses the stored points, the point server 60 subtracts the used points from the stored cumulative points.

It is noted that the electronic receipt management server 4 and the point server 60 may be one server or a cloud having both functions.

Meanwhile, in the electronic receipt system 1 having the above configuration, the customer performs member registration on the electronic receipt management server 40 in order to receive a receipt issued at a store in the state of the electronic receipt information. Hereinafter, the customer who has performed the member registration is also referred to as a member.

The electronic receipt management server 40 delivers a member registration completion mail including the member ID and a password to the customer terminal 50 of the customer who has performed the member registration. Accordingly, the member registration is terminated. After the member registration, for example, a code symbol such as a barcode obtained by converting the member ID into a code symbol is displayed on the display unit of the customer terminal 50 authenticated by login. The electronic receipt management server 40 registers member information including the member ID of the member registered as a member in the member management unit 432.

In the electronic receipt system 1 configured as described above, electronic receipt information indicating the content of a product traded on the POS terminal 10 is transmitted to the electronic receipt management server 40 and is provided to the customer terminal 50 via the electronic receipt management server 40. Therefore, the member can browse the electronic receipt information (the electronic receipt) provided by the electronic receipt management server 40 on the customer terminal 50 by accessing the electronic receipt management server 40 using the customer terminal 50.

Next, a configuration of a main device included in the above-described electronic receipt system 1 will be described.

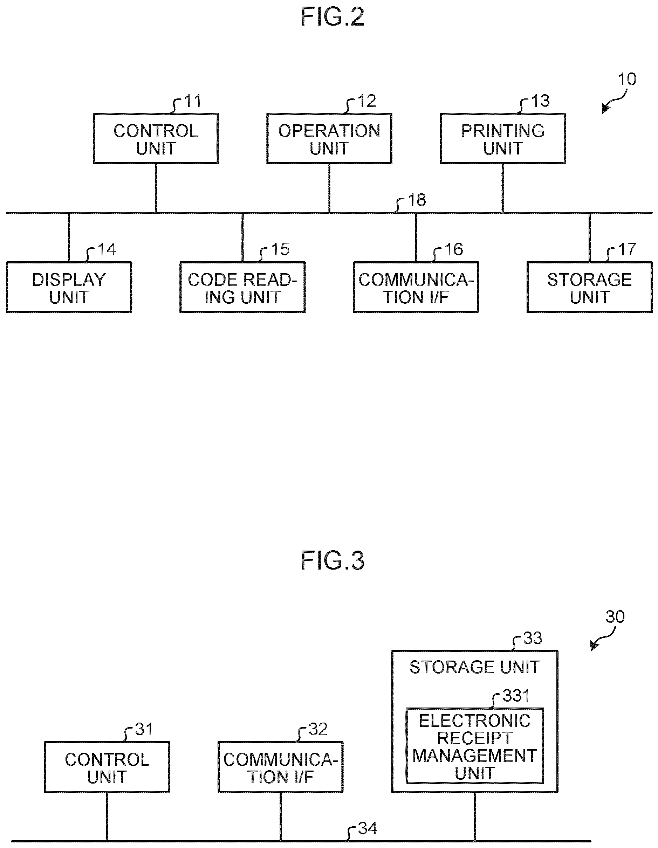

First, a hardware configuration of the POS terminal 10 will be described with reference to FIG. 2. FIG. 2 is a diagram illustrating an example of a hardware configuration of the POS terminal 10.

As illustrated in FIG. 2, the POS terminal 10 includes a control unit 11 that comprehensively controls various calculations and each unit of the POS terminal 10. The control unit 11 is a computer including a central processing unit (CPU), a read only memory (ROM), a random access memory (RAM), a real time clock (RTC), and the like. The ROM stores various programs and data. The RAM temporarily stores various programs and rewritably stores various pieces of data. The RTC clocks the current date and time.

The control unit 11 is connected to an operation unit 12, a printing unit 13, a display unit 14, a code reading unit 15, a communication I/F 16, and a storage unit 17 via a bus 18.

The operation unit 12 includes various operation keys for the operator to perform operation inputs. As the operation keys, for example, in addition to a number key for inputting a numerical value, a cursor key for selecting a predetermined item, and a selection determination key, a closing key for executing settlement processing of one transaction and terminating the transaction and the like are provided.

The printing unit 13 includes a printer device that performs printing of a receipt, a journal, an adjustment receipt, an inspection receipt, and the like. The printing unit 13 prints receipt information on the conveyed long roll paper using, for example, a thermal head having a heating medium. The receipt information to be printed is product information (a product name, a product price, or the like) of the purchased product, settlement information associated with settlement processing, or the like. Thereafter, the paper is cut to issue a receipt, a journal, and the like.

The display unit 14 is, for example, a liquid crystal display or the like, and displays various types of information such as an item name and a price of a product registered for sale, a total amount of one transaction, the settlement of which has been declared, and the amount of a change. It is noted that the display unit 14 may have a touch panel configuration, and in this case, the touch panel functions as the operation unit 12.

The code reading unit 15 is, for example, a scanner device that optically reads a code symbol such as a barcode or a two-dimensional code. The code reading unit 15 reads, for example, a code symbol attached to a product, a code symbol displayed on the display unit 53 of the customer terminal 50, and the like. The control unit 11 inputs information stored in the read code symbol. It is noted that a code symbol attached to a product stores a product code or the like for specifying the product. In addition, the code symbol displayed on the customer terminal 50 stores a member ID and the like for specifying a recipient of an electronic receipt received by the customer terminal 50.

It is noted that the member ID may be magnetically or electrically stored in the customer terminal 50. In addition, the member ID may be magnetically or electrically stored in a medium (for example, a card medium) other than the customer terminal 50. In this case, the POS terminal 10 separately includes a reading unit capable of reading magnetically or electrically stored information, and reads the stored member ID via the reading unit. The control unit 11 inputs the read member ID.

Furthermore, the control unit 11 is connected to the communication interface (I/F) 16 via the bus 18. The control unit 11 can be connected to the network Na via the communication I/F 16.

Furthermore, the control unit 11 is connected to the storage unit 17 via the bus 18. The storage unit 17 is an auxiliary storage device such as a hard disk drive (HDD) or a solid state drive (SSD). The storage unit 17 stores various programs and various types of setting information executable by the control unit 11 (CPU). For example, the storage unit 17 stores a program (hereinafter, also referred to as a generation program) for generating the electronic receipt information from the receipt information. The control unit 11 converts receipt information in an unstructured format into electronic receipt information in a structured format on the basis of a conversion rule described in a receipt information schema (not illustrated) in cooperation with a generation program.

In addition, the storage unit 17 stores therein various data files such as a product master that stores product information such as a product name and a unit price in association with a product code of each product.

In addition, the storage unit 17 stores a POS number, a company code, an industry type/business mode code, a store code, and the like for identifying the POS terminal 10 of the own device from other POS terminals 10. Here, the industry type/business mode code is, for example, a code (a classification code) for distinguishing the industry type/business mode of a store as a convenience store, a supermarket, a department store, a pharmacy, a restaurant, a cafe, or the like. It is noted that such a business type/business mode can be freely and selectively changed depending on user's preference. In addition, the company code (an identification code of a company that operates a store) and the industry type/business mode code may be registered in the electronic receipt server 30. In addition, a different store code is attached to each store in order to be able to specify each store in each store managed by the same company.

Next, a hardware configuration of the electronic receipt server 30 will be described with reference to FIG. 3. FIG. 3 is a diagram illustrating an example of a hardware configuration of the electronic receipt server 30.

As illustrated in FIG. 3, the electronic receipt server 30 includes a control unit 31 that comprehensively controls various calculations and respective units of the electronic receipt server 30. The control unit 31 is a computer including a CPU, a ROM, a RAM, a RTC, and the like. The ROM stores various programs and data. The RAM temporarily stores various programs and rewritably stores various pieces of data. The RTC clocks the current date and time.

The control unit 31 is connected to a communication I/F 32 via a bus 34. The control unit 31 can be connected to the network Nb via the communication I/F 32.

Furthermore, the control unit 31 is connected to a storage unit 33 via the bus 34. The storage unit 33 is an auxiliary storage device such as an HDD or an SSD. The storage unit 33 stores various programs and various types of setting information executable by the control unit 31 (CPU). Furthermore, the storage unit 33 includes an electronic receipt management unit 331 for storing and managing electronic receipt information for each company that operates a store.

Next, a hardware configuration of the electronic receipt management server 40 will be described with reference to FIG. 4. FIG. 4 is a diagram illustrating an example of a hardware configuration of the electronic receipt management server 40.

As illustrated in FIG. 4, the electronic receipt management server 40 includes a control unit 41 that comprehensively controls various calculations and respective units of the electronic receipt management server 4. The control unit 41 is a computer including a CPU, a ROM, a RAM, a RTC, and the like. The ROM stores various programs and data. The RAM temporarily stores various programs and rewritably stores various pieces of data. The RTC clocks the current date and time.

The control unit 41 is connected to a communication I/F 42 via a bus 44. The control unit 41 can be connected to the network Nb via the communication I/F 42.

Furthermore, the control unit 41 is connected to a storage unit 43 via the bus 44. The storage unit 43 is an auxiliary storage device such as an HDD or an SSD. The storage unit 43 stores various programs and various types of setting information executable by the control unit 41 (CPU).

Furthermore, the storage unit 43 includes an electronic receipt management unit 431, a member management unit 432, a condition management unit 433, a campaign management unit 434, and the like. The electronic receipt management unit 431 stores and manages electronic receipt information received from the electronic receipt server 30 of each company for each member.

FIG. 5 is a diagram schematically illustrating an example of a data configuration of the electronic receipt management unit 431. As illustrated in FIG. 5, the electronic receipt management unit 431 includes an electronic receipt information unit 4311, an additional information unit 4312, and a point total value unit 4313.

The electronic receipt information unit 4311 stores electronic receipt information received from the electronic receipt server 30 of each company for each member (member ID). The additional information unit 4312 stores the additional information added to the electronic receipt information in association with the electronic receipt information of the electronic receipt information unit 4311. The additional information includes the above-described benefit information, campaign information, and the like. The point total value unit 4313 stores the sum of granted points on the basis of the electronic receipt information in association with the electronic receipt information of the electronic receipt information unit 4311.

Returning back to FIG. 4, the member management unit 432 stores and manages information of the member registered as a member. The condition management unit 433 stores and manages each granting condition related to point granting. For example, an identifier (hereinafter, also referred to as a condition ID) for identifying each granting condition is attached to each of the granting conditions.

For example, a condition (hereinafter, also referred to as an electronic receipt condition) of the electronic receipt information having a right to acquire the point can be set as the granting condition. As an example, the electronic receipt condition may be a condition that a transaction is performed in a predetermined period, or may be a condition that a specific product is included. It is noted that, by setting no electronic receipt condition, it is also possible to set all the electronic receipt information to have a right to acquire points.

In addition, a condition related to a point granting method can be set as a granting condition. As an example, in a case where a point is granted by lottery, the granting condition may be statistical information such as a winning probability. In this case, for example, it is also possible to store mutually different winning probabilities such as 5%, 10%, and 20% as the granting condition and to set second point information such that different point values are granted for each winning probability. As an example, winning probabilities of 5%, 10%, and 20% may be set, and a point value (5% = 10 points, 10% = 5 points, 20% = 1 point, or the like) corresponding to each of the winning probabilities may be set as the granting condition.

The campaign management unit 434 stores and manages, for each campaign, a target product (a product code) of a campaign, a plan content of the campaign, a campaign period, a point granted by an application for the campaign, and the like. For example, each of the campaigns is provided with an identifier (hereinafter, also referred to as a campaign ID) for identifying each campaign.

In the present embodiment, it is assumed that a point is granted by an explicit application operation for a campaign by a customer. For example, by setting an upper limit value of the number of people who can apply for a campaign to a campaign content or the like, the number of people to whom points are granted can be limited. In this case, it is preferable to record the total number of people who have made an application in the campaign management unit 434 or the like every time an application for a campaign is received, thereby making it possible to identify whether the upper limit value has been reached.

Furthermore, for example, by setting the number of times an application can be made to a campaign to a campaign content or the like, the number of times a point is granted to a person can be limited. In this case, it is preferable that the number of times of application for each member can be identified by recording the number of times of application based on the campaign information in the campaign information or the like added to the electronic receipt information.

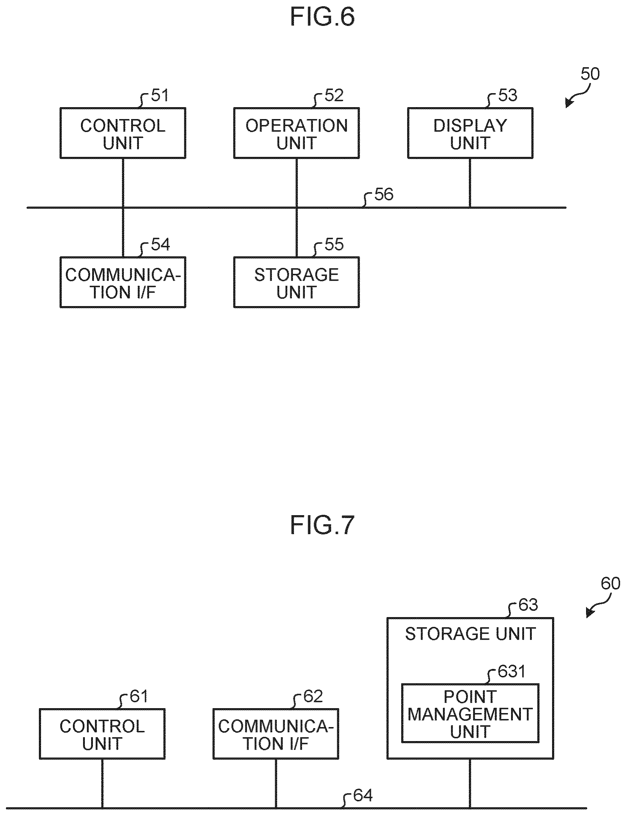

Next, a hardware configuration of the customer terminal 50 will be described with reference to FIG. 6. FIG. 6 is a diagram illustrating an example of a hardware configuration of the customer terminal 50.

As illustrated in FIG. 6, the customer terminal 50 includes a control unit 51 that comprehensively controls various calculations and respective units of the customer terminal 50. The control unit 51 is a computer including a CPU, a ROM, a RAM, a RTC, and the like. The ROM stores various programs and data. The RAM temporarily stores various programs and rewritably stores various pieces of data. The RTC clocks the current date and time.

The control unit 51 is connected to an operation unit 52 and a display unit 53 via a bus 56. The operation unit 52 includes various operation keys and a pointing device for an operator (a member) to perform an operation input. The display unit 53 is, for example, a liquid crystal display or the like, and displays various types of information such as an electronic receipt to be described later. It is noted that the display unit 53 may have a touch panel configuration, and in this case, the touch panel functions as the operation unit 52.

Furthermore, the control unit 51 is connected to a communication I/F 54 via the bus 56. The control unit 51 can be connected to the network Nb via the communication I/F 54.

Furthermore, the control unit 51 is connected to a storage unit 55 via the bus 56. The storage unit 55 is an auxiliary storage device such as an HDD or an SSD. The storage unit 55 stores various programs and various types of setting information executable by the control unit 51 (CPU). For example, the storage unit 55 stores a program such as a web browser capable of displaying electronic receipt information and the like provided by the electronic receipt management server 40 in cooperation with the electronic receipt management server 40.

Next, a hardware configuration of the point server 60 will be described with reference to FIG. 7. FIG. 7 is a diagram illustrating an example of a hardware configuration of the point server 60.

As illustrated in FIG. 7, the point server 60 includes a control unit 61 that comprehensively controls various calculations and respective units of the point server 60. The control unit 61 is a computer including a CPU, a ROM, a RAM, a RTC, and the like. The ROM stores various programs and data. The RAM temporarily stores various programs and rewritably stores various pieces of data. The RTC clocks the current date and time.

Furthermore, the control unit 61 is connected to a communication I/F 62 via a bus 64. The control unit 61 can be connected to the network Nb via the communication I/F 62.

Furthermore, the control unit 61 is connected to a storage unit 63 via the bus 64. The storage unit 63 is an auxiliary storage device such as an HDD or an SSD. The storage unit 63 stores various programs and various types of setting information executable by the control unit 61 (CPU). In addition, the storage unit 63 includes a point management unit 631 that stores a point granted to a member for each member (member ID).

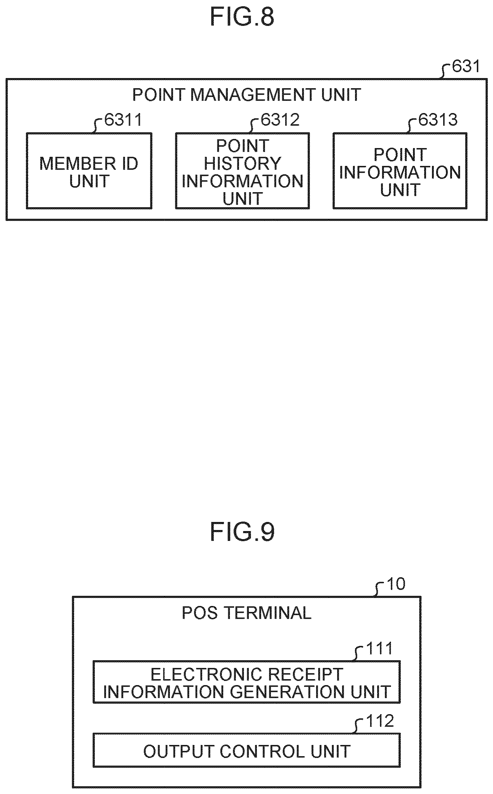

FIG. 8 is a diagram schematically illustrating an example of a data configuration of the point management unit 631. As illustrated in FIG. 8, the point management unit 631 includes, for each member ID, a member ID unit 6311, a point history information unit 6312, and a point information unit 6313. The member ID unit 6311 stores a member ID for specifying a member.

The point history information unit 6312 stores, as a point history, a granting date and time when a point is granted, a point value thereof, a use date and time of a used point, a point value thereof, and the like for each member ID. The point information unit 6313 stores a cumulative point obtained by accumulating points for each member ID.

Next, an operation example of the electronic receipt system 1 will be described. First, control processing performed by the POS terminal 10 will be described with reference to FIGS. 9, 10, and 11.

FIG. 9 is a diagram illustrating an example of a functional configuration of the POS terminal 10. As illustrated in FIG. 9, the POS terminal 10 includes an electronic receipt information generation unit 111 and an output control unit 112 as functional configurations.

It is noted that, in the present embodiment, the functional configuration of the POS terminal 10 is a software configuration realized by cooperation of a processor (for example, a CPU) of the POS terminal 10 and a program, but the present invention is not limited thereto, and a hardware configuration in which a part or all of the functional configuration is realized by a dedicated circuit or the like may be adopted.

The electronic receipt information generation unit 111 has a function of generating electronic receipt information on the basis of product information of a traded product. The output control unit 112 has a function of transmitting the generated electronic receipt information to the electronic receipt server 30.

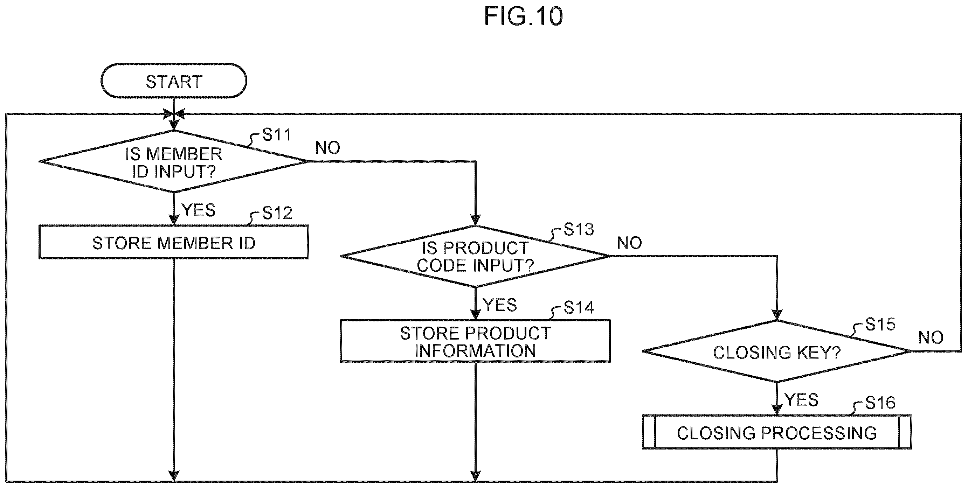

FIG. 10 is a flowchart illustrating an example of processing performed by the POS terminal 10. First, the control unit 11 determines whether the member ID has been input via the code reading unit 15 (step S11). Upon determining that the member ID has been input (step S11; Yes), the control unit 11 stores the member ID in the RAM or the like (step S12). Then, the control unit 11 returns to step S11 and stands by.

On the other hand, upon determining that the member ID has not been input (step S11; No), the control unit 11 determines whether the product code has been input via the code reading unit 15 (step S13). Upon determining that the product code has been input (step S13; Yes), the control unit 11 reads product information of a product corresponding to the product code from a product master on the basis of the input product code, and stores (registers) the read product information in the RAM or the like (step S14). Then, the control unit 11 returns to step S11 and stands by.

Upon determining that the product code has not been input (step S13; No), the control unit 11 determines whether the closing key has been operated (step S15). Upon determining that the closing key has been operated (step S15; Yes), the control unit 11 executes closing processing (step S16). Then, the control unit 11 returns to step S11 and stands by. Upon determining that the closing key has not been operated (step S15; No), the control unit 11 returns to step S11 and stands by.

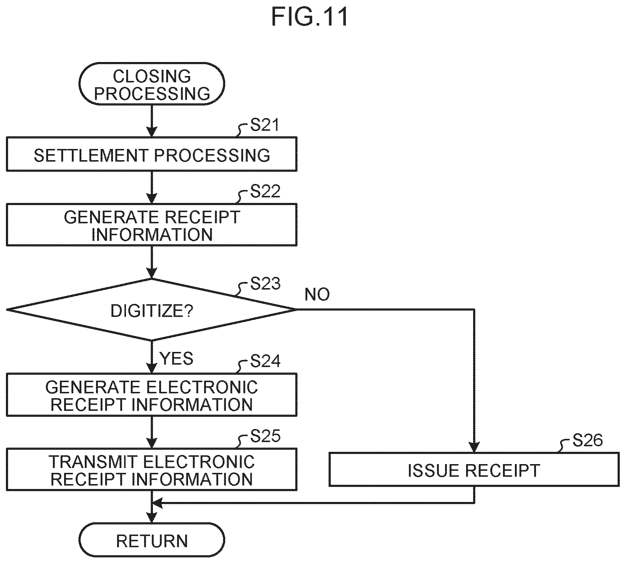

Here, the closing processing executed in step S16 will be described with reference to FIG. 11. FIG. 11 is a flowchart illustrating an example of the closing processing performed by the POS terminal 10.

First, the control unit 11 executes settlement processing on the basis of the product information stored in the RAM or the like in step S14 (step S21). Next, the control unit 11 generates receipt information on the basis of the product information and the settlement information (step S22).

Next, the control unit 11 (the electronic receipt information generation unit 111) determines whether to digitize the generated receipt information (step S23). In the present embodiment, the control unit 11 (the electronic receipt information generation unit 111) determines to digitize the receipt information when the member ID is stored in the RAM. Upon determining that the receipt information is to be digitized (step S23; Yes), the control unit 11 (the electronic receipt information generation unit 111) generates the electronic receipt information on the basis of the receipt information (step S24).

The generated electronic receipt information includes the member ID. Next, the control unit 11 (the output control unit 112) transmits the generated electronic receipt information to the electronic receipt server 30 (step S25). Next, the control unit 11 clears the product information stored in step S12, and returns to S11 to stand by.

It is noted that, upon determining that the generated receipt information is not to be digitized (step S23; No), the control unit 11 (the output control unit 112) issues a receipt in which the receipt information generated in step S22 is printed by the printing unit 13 (step S26). Next, the control unit 11 clears the product information stored in step S12, and returns to S11 to stand by.

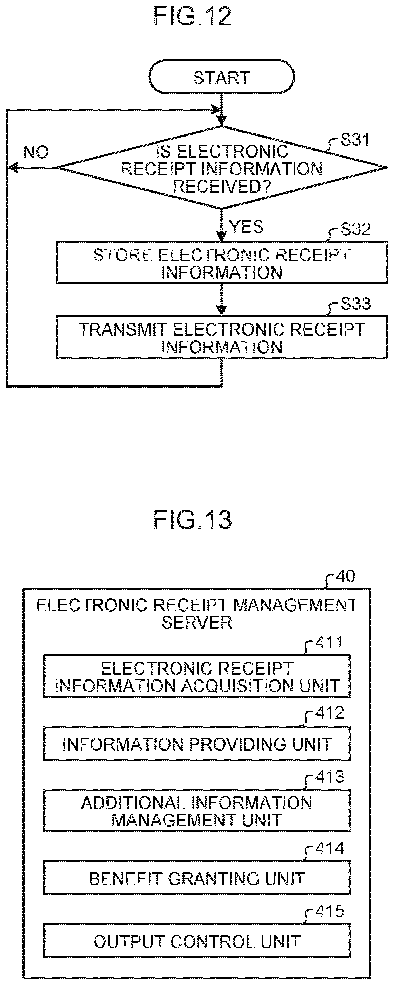

Next, electronic receipt management processing performed by the electronic receipt server 30 will be described with reference to FIG. 12. FIG. 12 is a flowchart illustrating an example of the electronic receipt management processing performed by the electronic receipt server 30.

The control unit 31 of the electronic receipt server 30 waits until the electronic receipt information is received from the POS terminal 10 (step S31; No). Upon determining that the electronic receipt information has been received (step S31; Yes), the control unit 31 stores the electronic receipt information for each company in the electronic receipt management unit 331 of the storage unit 33 (step S32). Then, the control unit 31 transmits the stored electronic receipt information to the electronic receipt management server 40 (step S33), and returns to step S31 to stand by.

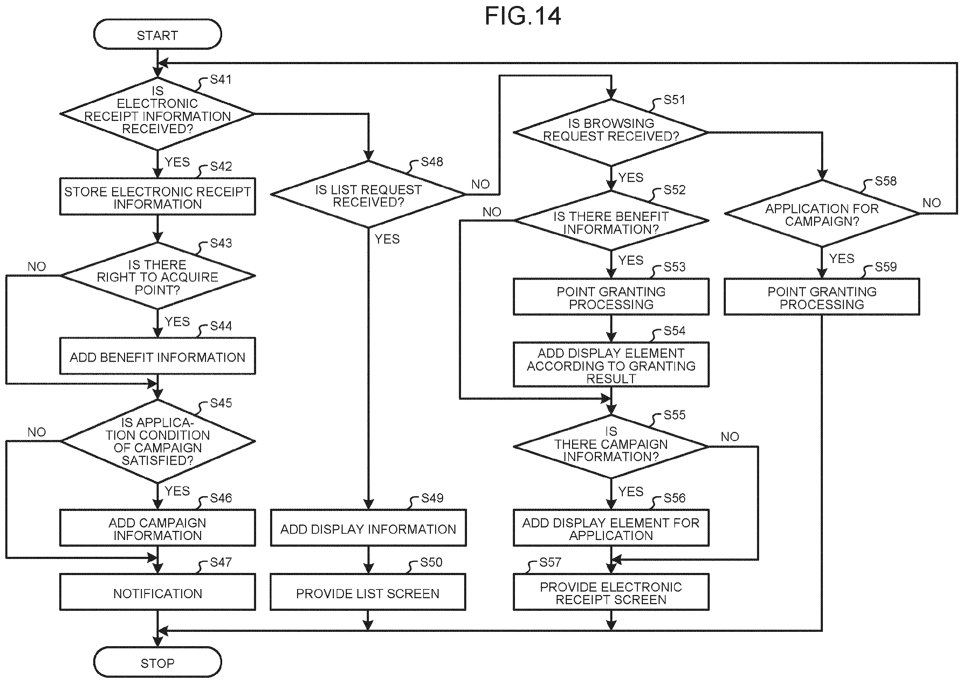

Next, control processing performed by the electronic receipt management server 40 will be described with reference to FIGS. 13 and 14.

FIG. 13 is a diagram illustrating an example of a functional configuration included in the electronic receipt management server 40. As illustrated in FIG. 13, the electronic receipt management server 40 includes an electronic receipt information acquisition unit 411, an electronic receipt information providing unit 412, an additional information management unit 413, a benefit granting unit 414, and an output control unit 415 as functional configurations.

It is noted that, in the present embodiment, the functional configuration of the electronic receipt management server 40 is a software configuration realized by cooperation between a processor (for example, a CPU) of the electronic receipt management server 40 and a program, but the present invention is not limited thereto, and a hardware configuration in which a part or all of the functional configuration is realized by a dedicated circuit or the like may be adopted.

The electronic receipt information acquisition unit 411 has a function of acquiring electronic receipt information generated by the POS terminal 10. Specifically, the electronic receipt information acquisition unit 411 acquires the electronic receipt information transmitted from the POS terminal 10 via the electronic receipt server 30. Then, the electronic receipt information acquisition unit 411 stores the acquired electronic receipt information in the electronic receipt information unit 4311.

The electronic receipt information providing unit 412 has a function of providing the electronic receipt information stored in the electronic receipt information unit 4311 to the customer terminal 50 serving as a recipient of the electronic receipt information. Specifically, the electronic receipt information providing unit 412 provides the electronic receipt information to the customer terminal 50 corresponding to the member ID included in the electronic receipt information.

For example, in response to a list request transmitted from the customer terminal 50, the electronic receipt information providing unit 412 provides, to the customer terminal 50, a list screen displaying a list of electronic receipt information related to the member ID of the customer terminal 50 or display information that can display the list screen on the customer terminal 50. Furthermore, for example, in response to a browsing request transmitted from the customer terminal 50, the electronic receipt information providing unit 412 provides, to the customer terminal 50, an electronic receipt screen representing the electronic receipt information designated by the browsing request as an electronic receipt, or display information on which the electronic receipt screen can be displayed on the customer terminal 50.

Furthermore, the electronic receipt information providing unit 412 has a function of adding display information according to additional information to the electronic receipt information displayed on the list screen or adding a display element to the electronic receipt screen on the basis of the additional information added to the electronic receipt information.

The additional information management unit 413 has a function of adding benefit information and campaign information as the additional information to the electronic receipt information stored in the electronic receipt information unit 4311.

Specifically, on the basis of the granting condition (the electronic receipt condition) set in the condition information unit 4331, the additional information management unit 413 adds benefit information including a condition ID corresponding to the granting condition to the electronic receipt information having a right to acquire a point.

Further, based on the campaign target product set in the campaign management unit 434, the additional information management unit 413 adds the campaign information including the campaign ID of the campaign that can be applied to the electronic receipt information including the target product.

The benefit granting unit 414 performs processing for granting a point on the basis of the benefit information added to the electronic receipt information. Specifically, upon receiving a request to browse the electronic receipt information to which the benefit information is added, the benefit granting unit 414 performs processing for granting a point on the basis of a granting condition related to the benefit information.

For example, in a case where the winning probability is set in the additional condition, the benefit granting unit 414 performs lottery related to point granting on the basis of a predetermined algorithm with reception of the request to browse the electronic receipt information as a trigger. When winning is obtained as a result of the lottery, the benefit granting unit 414 grants a point value set in the condition management unit 433. Furthermore, in a case where a user is not selected as a result of the lottery, the benefit granting unit 414 suppresses granting of a point.

Furthermore, the benefit granting unit 414 performs control for granting a point on the basis of the campaign information added to the electronic receipt information. Specifically, upon receiving a request to browse the electronic receipt information to which the campaign information is added, the benefit granting unit 414 provides, to the customer terminal 50, a means configured to allow a customer to apply for the campaign in cooperation with the electronic receipt information providing unit 412. Then, when the application for the campaign is instructed by application information transmitted from the customer terminal 50, the benefit granting unit 414 performs processing for granting a point on the basis of the campaign content or the like stored in the campaign management unit 434. The application information includes, for example, an identifier of the electronic receipt information, a campaign ID, and the like.

For example, in a case where an upper limit value is set for the number of applicants, the benefit granting unit 414 determines whether the number of applicants so far has reached the upper limit value. When the upper limit value is not reached, the benefit granting unit 414 grants a point value specified in the campaign. Furthermore, when the number of applicants has reached the upper limit value, the benefit granting unit 414 suppresses granting of a point. It is noted that, in a case where the point is granted, the benefit granting unit 414 updates the number of applicants by adding 1 to the number of applicants.

It is noted that, in a case where the state of the benefit information is invalid or is already used, and in a case where the state of the campaign information indicates that an application for a campaign is finished, the benefit granting unit 414 determines that the right to acquire points has been exhausted, and suppresses the processing of granting a point.

Furthermore, the benefit granting unit 414 calculates the total value of the granted points on the basis of the benefit information and the campaign information for each piece of the electronic receipt information, and stores the total value in association with the electronic receipt information.

The output control unit 415 outputs the point granted by the benefit granting unit 414 to the point server 60 together with the member ID.

FIG. 14 is a flowchart illustrating an example of processing performed by the electronic receipt management server 4. First, the control unit 41 (the electronic receipt information acquisition unit 411) determines whether the electronic receipt information has been received from the electronic receipt server 30 (step S41). Upon determining that the electronic receipt information has been received (step S41; Yes), the control unit 41 (the electronic receipt information acquisition unit 411) stores the received electronic receipt information in the electronic receipt management unit 431 (the electronic receipt information unit 4311) for each member ID (step S42).

Subsequently, the control unit 41 (the additional information management unit 413) determines whether the electronic receipt information stored in the electronic receipt management unit 431 has a right to acquire a point on the basis of the electronic receipt condition of the condition management unit 433 (step S43). Upon determining that the electronic receipt information does not have the acquisition right (step S43; No), the processing proceeds to step S45. Further, upon determining that the user has the acquisition right (step S43; Yes), the control unit 41 (the additional information management unit 413) adds the corresponding benefit information to the electronic receipt information (step S44), and the processing proceeds to step S45.

Subsequently, the control unit 41 (the additional information management unit 413) determines whether the electronic receipt information stored in the electronic receipt management unit 431 satisfies application requirements of the campaign on the basis of the campaign target product set in the campaign management unit 434 (step S45). Upon determining that the application requirements are not satisfied (step S45; No), the processing proceeds to step S47. In addition, upon determining that the application requirements are satisfied (step S45; Yes), the control unit 41 (the additional information management unit 413) adds the campaign information that can be applied to the electronic receipt information (step S46), and the processing proceeds to step S47.

Subsequently, the control unit 41 (the electronic receipt information providing unit 412) notifies the customer terminal 50 specified on the basis of the member ID included in the electronic receipt information that the electronic receipt information has been received (step S47). Then, the control unit 41 ends the processing.

In addition, in step S41, upon determining that the electronic receipt information is not received (No in step S41), the control unit 41 (the electronic receipt information providing unit 412) determines whether a list request is received from the customer terminal 50 (step S48).

Upon determining that the list request has been received (step S48; Yes), the control unit 41 (the electronic receipt information providing unit 412) adds the information for display to the electronic receipt information on the basis of the additional information of the electronic receipt information associated with the member ID of the customer terminal 50 as a transmission source (step S49). Furthermore, in step S49, the control unit 41 (the electronic receipt information providing unit 412) adds display information representing the point value to the electronic receipt information on the basis of the point total value associated with the electronic receipt information. Subsequently, the control unit 41 (the electronic receipt information providing unit 412) provides a list screen of the electronic receipt information to the customer terminal 50 (step S50), and ends the processing.

As described above, in step S49, the electronic receipt information providing unit 412 adds, to the electronic receipt information to be displayed on the list screen, the display information according to the type and state of the additional information added to the electronic receipt information. Furthermore, in step S49, the electronic receipt information providing unit 412 adds display information indicating the total value of the points based on the benefit information and the campaign information to the electronic receipt information to be displayed on the list screen.

In the customer terminal 50, when the list screen is provided from the electronic receipt management server 40, the control unit 51 causes the display unit 53 to display the provided list screen. It is noted that an example of a screen displayed on the display unit 53 of the customer terminal 50 will be described later.

When the list request is not received (step S48; No), the control unit (the electronic receipt information providing unit 412) determines whether a browsing request designating the electronic receipt information has been received (step S51).

When the browsing request is received (step S51; Yes), the control unit 41 (the benefit granting unit 414) determines whether benefit information is added to the designated electronic receipt information (step S52). When the benefit information is not added (step S52; No), the processing proceeds to step S55.

Furthermore, in a case where the benefit information is added (step S52; Yes), the control unit 41 (the benefit granting unit 414) performs processing related to point granting on the basis of a granting condition corresponding to the benefit information (step S53).

Here, in the processing of step S53, for example, when the point is granted by winning of the lottery, the control unit 41 (the benefit granting unit 414) updates a state included in the benefit information to a used state and transmits the granted point value to the point server 60 together with the member ID. Furthermore, the control unit 41 (the benefit granting unit 414) adds the granted point value to the point total value. Furthermore, in the processing of step S53, for example, in a case where the point granting has not been performed due to the non-winning of the lottery, the control unit 41 (the benefit granting unit 414) updates the state to the used state. It is noted that, in a case where the state of the benefit information is invalid, the control unit 41 (the benefit granting unit 414) suppresses the processing itself related to the granting of a second point.

Subsequently, the control unit 41 (the electronic receipt information providing unit 412) adds a display element corresponding to the processing result of step S53 to the electronic receipt information (step S54).

Subsequently, the control unit 41 (the benefit granting unit 414) determines whether campaign information is added to the designated electronic receipt information (step S55). When no campaign information is added (step S55; No), the processing proceeds to step S57.

Furthermore, in a case where the campaign information is added (step S55; Yes), the control unit 41 (the benefit granting unit 414) adds a display element for application to the electronic receipt information on the basis of the campaign content or the like corresponding to the campaign information (step S56).

Subsequently, the control unit 41 (the electronic receipt information providing unit 412) provides the electronic receipt screen of the designated electronic receipt information to the customer terminal 50 (step S57), and ends the processing.

As a result, in the customer terminal 50, the electronic receipt screen of the selected electronic receipt information is displayed on the display unit 53. It is noted that an example of the electronic receipt screen displayed on the customer terminal 50 will be described later.

Further, in a case where the browsing request is not received (step S51; No), the control unit (the benefit granting unit 414) determines whether an application for a campaign has been received by reception of the application information (step S58). Upon determining that the application for the campaign has not been received (step S58; No), the processing returns to step S41.

Upon determining that the application for the campaign has been received (step S58; Yes), the control unit (the benefit granting unit 414) executes processing for granting a point (step S59) and ends the processing.

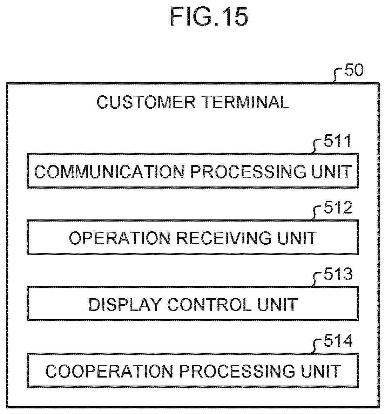

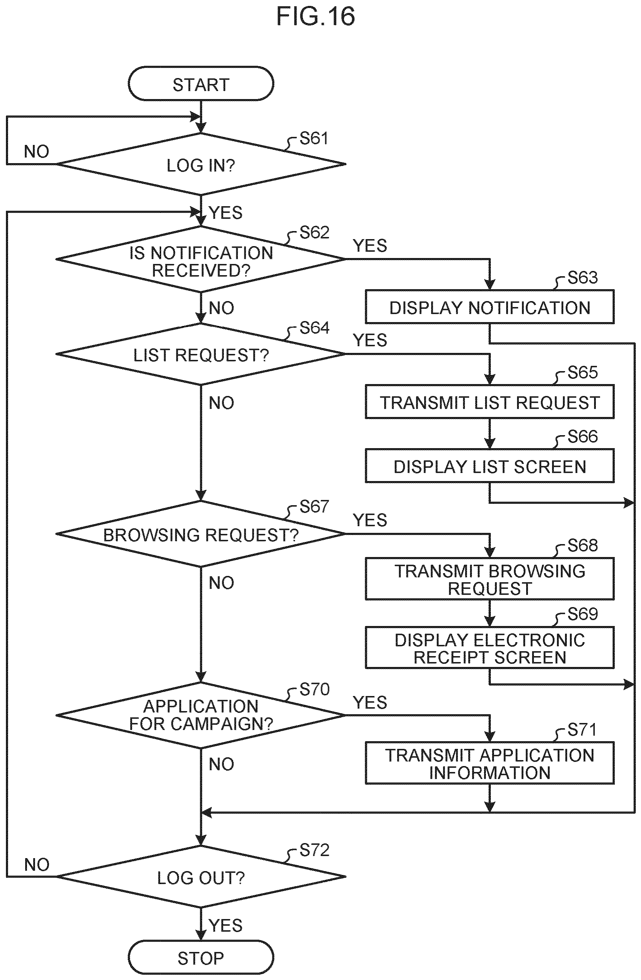

Next, control processing performed by the customer terminal 50 will be described with reference to FIGS. 15 and 16.

FIG. 15 is a diagram illustrating an example of a functional configuration of the customer terminal 50. As illustrated in FIG. 15, the customer terminal 50 includes a communication control unit 511, an operation receiving unit 512, a display control unit 513, and a cooperation processing unit 514 as functional configurations.

It is noted that, in the present embodiment, the functional configuration of the customer terminal 50 is a software configuration realized by cooperation of a processor (for example, a CPU) of the customer terminal 50 and a program, but the present invention is not limited thereto, and a hardware configuration in which a part or all of the functional configuration is realized by a dedicated circuit or the like may be adopted.

The communication control unit 511 controls the communication I/F 54 to communicate with various devices connected to the network Nb. The operation receiving unit 512 receives an operation from an operator of the customer terminal 50 via the operation unit 52. For example, the operation receiving unit 512 receives an operation on a screen displayed on the display unit 53. The display control unit 513 controls the display unit 53 to display various types of information on the display unit 53.

The cooperation processing unit 514 is an example of a reception means and a display control means. The cooperation processing unit 514 is a functional unit that performs processing in cooperation with the electronic receipt management server 40. The cooperation processing unit 514 provides an operator with various screens (graphical user interface (GUI)) in cooperation with the operation receiving unit 512 and the display control unit 513. Furthermore, the cooperation processing unit 514 cooperates with the communication control unit 511 to transmit and receive various types of information to and from the electronic receipt management server 40, and displays a screen based on the received information.

FIG. 16 is a flowchart illustrating an example of processing performed by the customer terminal 50. First, the control unit 51 (the cooperation processing unit 514) waits until the operator logs in (step S61; No). Upon determining that login has been performed (step S61: Yes), the control unit 51 (the cooperation processing unit 514) determines whether a notification indicating that the electronic receipt information has been received has been received from the electronic receipt management server 40 (step S62). Upon determining that the notification has been received (step S62; Yes), the control unit 51 (the cooperation processing unit 514) displays a notification indicating the reception of the electronic receipt information on the display unit 53 (step S63). This notification is, for example, a message such as "your electronic receipt has been checked". Then, the control unit 51 (the cooperation processing unit 514) proceeds to step S72.

Further, upon determining that the notification of electronic receipt information reception has not been received (step S62; No), the control unit 51 (the cooperation processing unit 514) determines whether an operation of requesting a list of electronic receipts has been performed (step S64).

Upon determining that the operation of requesting the list has been performed (step S64; Yes), the control unit 51 (the cooperation processing unit 514) transmits a request for a list of electronic receipts to the electronic receipt management server 40 (step S65). The electronic receipt management server 4 that has received the list request executes the processing in steps S48 to S50 in FIG. 14 and provides the list screen to the customer terminal 50. The control unit 51 (the cooperation processing unit 514) displays the list screen provided from the electronic receipt management server 4 on the display unit 53 (step S66), and the processing proceeds to step S72.

Upon determining that the list requesting operation has not been performed (step S64; No), the control unit 51 (the cooperation processing unit 514) determines whether an operation of designating the electronic receipt to be browsed has been performed (step S67).

Upon determining that the operation of requesting browsing of the electronic receipt has been performed (step S67; Yes), the control unit 51 (the cooperation processing unit 514) transmits a browsing request designating the electronic receipt to the electronic receipt management server 40 (step S68). The electronic receipt management server 4 that has received the browsing request executes the processing in steps S51 to S57 in FIG. 14 to provide the electronic receipt screen to the customer terminal 50. The control unit 51 (the cooperation processing unit 514) displays the electronic receipt screen provided from the electronic receipt management server 4 on the display unit 53 (step S69), and the processing proceeds to step S72.

Upon determining that the list requesting operation has not been performed (step S64; No), the control unit 51 (the cooperation processing unit 514) determines whether an operation of applying for the campaign has been performed (step S70).

Upon determining that the operation of applying for the campaign has been performed (step S70; Yes), the control unit 51 (the cooperation processing unit 514) transmits application information to the electronic receipt management server 40 (step S71), and the processing proceeds to step S72.

Subsequently, the control unit 51 (the cooperation processing unit 514) determines whether a logout is instructed from the operator (step S72). Upon determining that the logout is not instructed (step S72; No), the control unit 51 (the cooperation processing unit 514) returns to step S62. In addition, upon determining that the logout has been instructed (step S72; Yes), the control unit 51 (the cooperation processing unit 514) ends the processing.

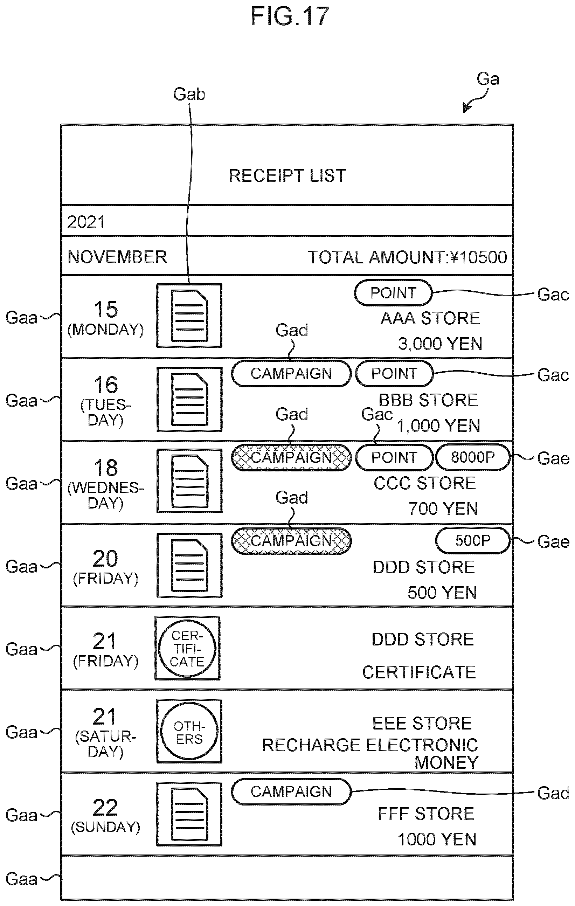

Next, various screen examples displayed on the display unit 53 of the customer terminal 50 by cooperation between the electronic receipt management server 40 and the customer terminal 50 will be described with reference to FIGS. 17 to 20. Here, FIGS. 17 to 20 are diagrams illustrating examples of screens displayed on the display unit 53 of the customer terminal 50.

First, the list screen will be described with reference to FIG. 17. The cooperation processing unit 514 of the customer terminal 50 causes the display unit 53 to display, for example, a list screen Ga illustrated in FIG. 17 on the basis of the list screen provided from the electronic receipt management server 40 or the display-use information of the list screen.

As illustrated in FIG. 17, the electronic receipt information related to the member ID of the operator who operates the customer terminal 50 is displayed as a list on the list screen Ga. Here, for example, the electronic receipt information is sorted in chronological order in which the transaction is performed and is displayed as a list.

Specifically, the list screen Ga includes a plurality of areas Gaa arranged side by side in the vertical direction, and information such as a store name, a total amount, and a transaction date included in the electronic receipt information is displayed in each of the areas Gaa. Furthermore, in each of the areas Gaa, an icon Gab indicating a data type such as electronic receipt information is displayed.

Furthermore, in the area Gaa, first display information Gac such as an icon and second display information Gad indicating the type, state, and the like of the additional information added to the electronic receipt information are added and displayed. Here, the first display information Gac and the second display information Gad are examples of the first display information. It is noted that the first display information Gac and the second display information Gad are preferably displayed using, for example, different background colors so that the type of the original additional information can be easily identified.

Here, the first display information Gac is display information indicating that benefit information is added. In the first display information Gac, for example, a character string such as "point" indicating that there is a right to acquire a point is displayed. In addition, the first display information Gac is displayed in a display form according to the state of the benefit information.

For example, when the state is "invalid" or "used", the first display information Gac may not be displayed, and when the state is "valid", the first display information Gac may be displayed. Furthermore, as another example, when the state is "invalid" or "used", the first display information Gac may be grayed out or the like to identifiably display that an acquisition right has been exhausted. As a result, the operator of the customer terminal 50 can easily confirm the electronic receipt information with the acquisition right of the point by viewing the area Gaa to which the first display information Gac is attached.

The second display information Gad is display information indicating that campaign information is added. In the second display information Gad, for example, a character string such as "campaign" indicating that an application for a campaign can be made is displayed. The second display information Gad is displayed in a display form according to the state of the campaign information.

For example, the second display information Gad may not be displayed when the state is "applied", and the second display information Gad may be displayed when the state is "not applied". Further, as another example, when the state is "applied", the second display information Gad may be grayed out or the like to identify the state indicating that the application has been made. FIG. 17 illustrates an example in which the second display information Gad of "applied" is grayed out. As a result, the operator of the customer terminal 50 can easily confirm whether the electronic receipt information is the campaign target or whether the application for the campaign has been completed by viewing the area Gaa to which the second display information Gad is attached.

It is noted that the character strings displayed in the first display information Gac and the second display information Gad are not limited to the example of FIG. 17. For example, the first display information Gac may display statistical information such as a lottery probability related to point granting. In addition, for example, statistical information such as the number of remaining people related to point granting may be displayed in the second display information Gad.

Further, in the area Gaa, third display information Gae such as an icon representing a point total value granted on the basis of the electronic receipt information is added and displayed.

Here, the third display information Gae is display information indicating a total value of points granted on the basis of the corresponding electronic receipt information. Specifically, the third display information Gae displays the total value of the points granted on the basis of the benefit information and the campaign information.

For example, in the third electronic receipt information from the top, the second display information Gad indicates that the campaign has been applied, and the third display information Gae indicates that 8000 P (points) has been granted by the application for the campaign.

Furthermore, for example, in the second electronic receipt information from the top, both the first display information Gac and the second display information Gad are in a valid and non-applied state, and the third display information Gae is not displayed since the granted point value is zero. It is noted that, in this case, the fact that the point total value is zero may be explicitly expressed using the third display information Gae.

As described above, on the list screen Ga, the first display information Gac and the second display information Gad indicating the acquisition state of the point that can be acquired on the basis of the electronic receipt information are displayed in association with each piece of the electronic receipt information. As a result, the operator of the customer terminal 50 can confirm whether the point is acquired for each piece of the electronic receipt information by viewing the first display information Gac and the second display information Gad displayed in association with the electronic receipt information.

In addition, on the list screen Ga, the electronic receipt information related to the member ID of the operator is displayed in a list, and the point value granted on the basis of each piece of the electronic receipt information is displayed in association with the third display information Gae. As a result, the operator of the customer terminal 50 can easily confirm the point value derived from each piece of the electronic receipt information by viewing the third display information Gae displayed in association with the electronic receipt information.

In addition, the list screen Ga can be scrolled in the vertical direction. The operator of the customer terminal 50 can display the area Gaa (electronic receipt information) that is not displayed in the screen by performing a scroll operation on the list screen Ga.

Each of the areas Gaa is configured to be selectable. The operator of the customer terminal 50 can select the electronic receipt information to be browsed by selecting the area Gaa.

Specifically, when the area Gaa in which the electronic receipt information is displayed is selected, the cooperation processing unit 514 transmits the browsing information designating the electronic receipt information of the selected area Gaa to the electronic receipt management server 40.

As a result, for example, the operator of the customer terminal 50 can exercise a right to acquire points based on the benefit information by selecting the area Gaa to which the first display information Gac is attached. In this case, when receiving a browsing request from the customer terminal 50, the benefit granting unit 414 of the electronic receipt management server 40 performs processing related to point granting on the basis of the benefit information of the electronic receipt information designated by the browsing request.

Here, for example, in a case where a granting condition of the benefit information instructs point granting by lottery, the benefit granting unit 414 of the electronic receipt management server 40 determines whether point granting can be performed by lottery. In addition, the benefit granting unit 414 is operated in cooperation with the electronic receipt information providing unit 412, thereby adding information (display element) indicating a lottery result to an electronic rate screen of the designated electronic receipt information and provides the electronic receipt screen to the customer terminal 50. In addition, the benefit granting unit 414 sets the state of the benefit information to "used" and exhausts the right to acquire the point based on the benefit information.

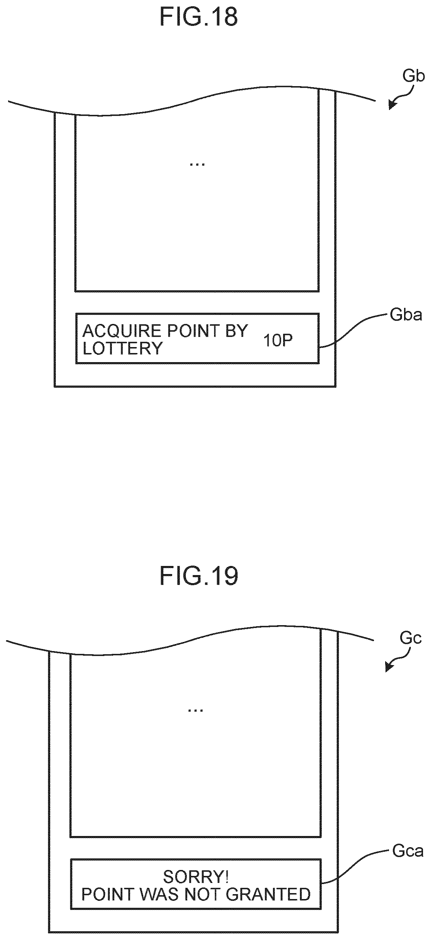

Here, FIGS. 18 and 19 are examples of an electronic receipt screen to which a display element indicating a lottery result is added. FIG. 18 is an electronic receipt screen in a case where a lottery result is winning, and FIG. 19 is an electronic receipt screen in a case where a lottery result is non-winning.

As illustrated in FIG. 18, in a case where the lottery result is winning, for example, a display element Gba representing a point value "10 P" granted by the lottery (winning) is added and displayed at the end of an electronic receipt screen Gb.

On the other hand, in a case where the lottery result indicates non-winning, as illustrated in FIG. 19, for example, a display element Gca such as a message indicating that the number of points has not been granted due to the result of non-winning is added to a tail portion of an electronic receipt screen Gc and displayed.

Furthermore, for example, the operator of the customer terminal 50 can exercise the right to acquire a point based on the campaign information by selecting the area Gaa to which the second display information Gad is attached. In this case, when receiving a browsing request from the customer terminal 50, the benefit granting unit 414 of the electronic receipt management server 40 adds a display element for applying to a campaign to the electronic rate screen of the selected electronic receipt information, and transmits the display element to the customer terminal 50.

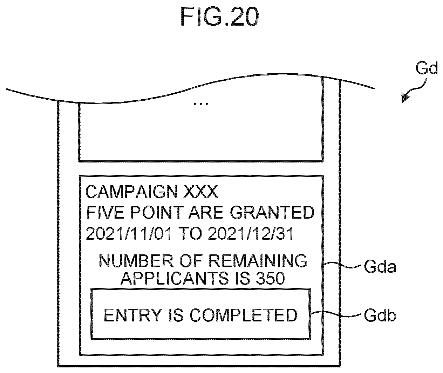

Here, FIG. 20 is an example of an electronic receipt screen to which a display element for applying to a campaign is added. As illustrated in FIG. 20, for example, a display element Gda indicating information regarding a campaign is added and displayed at a tail portion of an electronic receipt screen Gd.

In the display element Gda, for example, information such as a name of a campaign, the number of points to be granted, and a campaign period is displayed. When a plan content of the campaign is to grant points to a predetermined number of applicants, the display element Gda displays information such as the number of remaining applicants.

Furthermore, in the display element Gda, an operator Gdb for an application for the campaign is displayed. The operator of the customer terminal 50 can make the application for the campaign by operating the operator Gdb. Upon receiving the operation of the operator Gdb, the cooperation processing unit 514 of the customer terminal 50 determines that the operation of applying for the campaign has been performed, and transmits application information to the electronic receipt management server 40.

On the other hand, when receiving the application information from the customer terminal 50, the benefit granting unit 414 of the electronic receipt management server 40 performs processing related to point granting on the basis of the campaign content or the like of the corresponding campaign.

For example, in a case where the number of applicants has not reached the upper limit value, the benefit granting unit 414 grants the number of points defined in association with the campaign. In this case, the benefit granting unit 414 determines that the state of the campaign information is applied, and exhausts the right to acquire a point based on the campaign information. Furthermore, in a case where the number of times of application has not reached the upper limit, the benefit granting unit 414 adds 1 to the number of times of application in the state of the campaign information. It is noted that, when the point is added, the benefit granting unit 414 may cooperate with the electronic receipt information providing unit 412 to provide the customer terminal 50 with a message indicating that the application has been received or a screen indicating that the point granting has been completed.

It is noted that, in a case where the state included in the campaign information indicates that application has been completed, for example, it is preferable to invalidate the operator Gdb and set a character string displayed on the operator Gdb to "entry is completed" or the like such that the state of application completion can be identified. In addition, even in a case where the number of users who have applied has reached a predetermined number, it is preferable to invalidate the operator Gdb and to set the character string displayed on the operator Gdb to "reception end" or the like, thereby making it possible to identify that the number of users has reached the predetermined number.

In this manner, the display element added according to the additional information of the corresponding electronic receipt information is displayed together on the electronic receipt screen displayed on the customer terminal 50. Therefore, the customer of the customer terminal 50 can efficiently confirm the result of point granting and operate campaign application for the electronic receipt information selected from the list screen.

As described above, in the electronic receipt system 1 according to the present embodiment, the customer terminal 50 receives an input of the member ID capable of identifying a user, and displays a list of the electronic receipt information associated with the member ID. In addition, in a case where additional information (benefit information and campaign information) related to benefit granting is added to the electronic receipt information, the customer terminal 50 displays the first display information Gac and the second display information Gad corresponding to the type of the additional information in association with the corresponding electronic receipt information.

As a result, the customer who operates the customer terminal 50 can easily confirm the electronic receipt information with a benefit by viewing the list screen displayed on the display unit 53.

It is noted that the above-described embodiment can be implemented by being appropriately modified by changing a part of the configuration or function of each of the above-described devices. Therefore, in the following, some modifications according to the above-described embodiment will be described as other embodiments. It is noted that, in the following description, points different from the above-described embodiment will be mainly described, and detailed description of points common to the contents already described will be omitted. In addition, the modifications described below may be implemented individually, or may be implemented in appropriate combination.

### (First Modification)

In the above embodiment, a form in which the customer terminal is the information processing device has been described, but the present invention is not limited thereto. For example, the electronic receipt management server 40 can be regarded as an example of the information processing device.

In this case, the electronic receipt information providing unit 412 of the electronic receipt management server 40 functions as an example of a reception means and a display control means. Specifically, the electronic receipt information providing unit 412 receives the input of the member ID when receiving the list request transmitted from the customer terminal 50, and displays a list screen of the electronic receipt information associated with the member ID on the display unit 53 of the customer terminal 50. Furthermore, in a case where additional information related to benefit granting is added to the electronic receipt information, the electronic receipt information providing unit 412 displays the first display information Gac and the second display information Gad according to the type of the additional information in association with the electronic receipt information displayed in the list.

As a result, effects similar to those of the above-described embodiment can be obtained.

### (Second Modification)

In the above-described embodiment, the point granting is performed by the electronic receipt management server 40, but the present invention is not limited thereto. For example, in a store, a service of granting a point corresponding to a transaction amount of a product may be performed.

In such a case, for example, the POS terminal 10 may transmit the generated electronic receipt information to the electronic receipt server 30 by including a point (hereinafter, also referred to as a store point) granted in the store. In addition, when acquiring the electronic receipt information including the store point from the electronic receipt server 30, the electronic receipt management server 40 may display a point value obtained by adding the store point to a point total value on the list screen as the third display information Gae. Furthermore, as another example, the electronic receipt management server 40 may newly provide display information for store points and display the display information on the list screen.

### (Third Modification)

In the above-described embodiment, the electronic receipt information transmitted from the POS terminal 10 reaches the electronic receipt management server 40 via the electronic receipt server 30, but the present invention is not limited thereto. For example, the electronic receipt information may be directly transmitted from the POS terminal 10 to the electronic receipt management server 40.

In addition, the electronic receipt management server 40 may have a cloud configuration to include the electronic receipt server 30.

### (Fourth Modification)

In the above-described embodiment, as an example of the list screen, the areas Gaa each serving as an operator for selecting the electronic receipt information are arranged side by side in the vertical direction. However, a screen layout of the list screen is not limited thereto.

For example, a calendar-like square may be set as the area Gaa, and the electronic receipt information related to the transaction of the date may be displayed in the area Gaa of the date on which the transaction is performed.

### (Fifth Modification)

In the above-described embodiment, the additional information management unit 413 of the electronic receipt management server 40 adds the additional information (benefit information and campaign information) to the electronic receipt information. However, the present invention is not limited to this embodiment. For example, the electronic receipt information may be transmitted from the POS terminal 10 or the electronic receipt server 30 to the electronic receipt management server 40 in a state in which the additional information is added to the electronic receipt information.

Furthermore, in this case, the POS terminal 10 and the electronic receipt server 30 may include the functional configuration of the additional information management unit 413, so that benefit information and canceling information may be added in a store or a company.

### (Sixth Modification)

Although a point granting service associated with the browsing of an electronic receipt and a point granting service associated with a campaign application have been exemplified as a service associated with point granting derived from electronic receipt information, the present invention is not limited thereto.

As long as a point is granted in association with the electronic receipt information, additional information related to another service may be stored in association with the electronic receipt information, and information for display according to the state of the additional information or the like may be displayed on the list screen as in the above-described embodiment.

It is noted that, in the above-described embodiment, the control program executed by each device may be provided by being recorded in a computer-readable recording medium such as a CD-ROM. In addition, the control program executed by each device may be configured to be stored on a computer connected to a network such as the Internet and may be configured to be provided by being downloaded via the network, or may be configured to be provided via the network such as the Internet.

Although the embodiments of the present invention have been described above, the above-described embodiments have been presented as examples, and are not intended to limit the scope of the invention. The above-described embodiments can be implemented in various other forms, and various omissions, substitutions, changes, and combinations can be made without departing from the gist of the invention. These embodiments and modifications thereof are included in the scope and gist of the invention, and are included in the invention described in the claims and the scope equivalent thereto.

### CITATION LIST

### Patent Literature

Patent Literature 1: JP 2021-038078 A

## Claims

1. An information processing device comprising:
a reception means that receives an input of an identifier capable of identifying a user; and
a display control means that displays a list of pieces of electronic receipt information associated with the identifier,
wherein the display control means displays, when additional information on benefit granting is added to the electronic receipt information, first display information according to a type of the additional information in association with the electronic receipt information displayed in the list.

2. The information processing device according to claim 1, wherein
the display control means displays the first display information indicating a state related to the benefit granting of the additional information.

3. The information processing device according to claim 2, wherein
the display control means displays, as the state related to the benefit granting of the additional information, the first display information indicating whether the state is a state in which the benefit granting by the additional information is executable.

4. The information processing device according to claim 1, wherein the display control means displays, when the additional information on the benefit granting is added to the electronic receipt information, second display information indicating a benefit granted by the additional information in association with the electronic receipt information displayed in the list.

5. The information processing device according to claim 4, wherein the display control means displays the second display information indicating a total value of points granted by the additional information.
